# EUROPÄISCHE PATENTSCHRIFT

(11) **EP 3 110 612 B1**
(45) Veröffentlichungstag und Bekanntmachung des Hinweises auf die Patenterteilung: **07.10.2020**
(21) Anmeldenummer: 15705559.1
(22) Anmeldetag: 12.02.2015
(51) Int. Cl.: B29C 65/56, F16B 5/02

(54) **VERFAHREN ZUR MONTAGE EINES BAUTEILS AUS EINEM FASERVERBUNDWERKSTOFF IM KRAFTFLUSS EINER KLEMMVERBINDUNG**
METHOD FOR MOUNTING A FIBER COMPOSITE COMPONENT IN THE FLOW OF FORCE OF A CLAMP CONNECTION
PROCÉDÉ DE MONTAGE D'UN ÉLÉMENT CONSTITUÉ D'UN MATÉRIAU COMPOSITE RENFORCÉ PAR DES FIBRES DANS LE FLUX DE FORCES D'UNE LIAISON PAR SERRAGE

(30) Priorität: 28.02.2014 DE 102014203761
(43) Veröffentlichungstag der Anmeldung: 04.01.2017
(73) Patentinhaber: Bayerische Motoren Werke Aktiengesellschaft, 80809 München (DE)
(72) Erfinder: CIFALDI, Sandro, 81477 München (DE); LENZ, Juergen, 85716 Unterschleißheim (DE); STERNAGEL, Roman, 80939 München (DE)
(86) Internationale Anmeldenummer: PCT/EP2015/052928
(87) Internationale Veröffentlichungsnummer: WO 2015/128195

(56) Entgegenhaltungen:
- EP-A1- 2 617 519
- US-A1- 2003 021 628

## Beschreibung

Die Erfindung betrifft ein Verfahren zur Montage eines Bauteils aus einem Faserverbundwerkstoff im Kraftfluss einer Klemmverbindung mit dem Schritt:
- Erhitzen des Faserverbundwerkstoffs zumindest in einem Montagebereich.

Bei der Befestigung von Bauteilen aus Faserverbundwerkstoffen unter Klemmung besteht das Problem, dass aufgrund des Setzverhaltens des Faserverbundwerkstoffs die Vorspannkraft der Klemmverbindung im Lauf der Zeit nachlässt.

Das Setzen beschreibt das Nachgeben des Werkstoffs unter der beim Anziehen einer Klemmverbindung in diesen eingeleiteten Vorspannkraft. Dieser Effekt kann z.B. bei Kunststoffen durch das Kriechen des Kunststoffes unter Belastung hervorgerufen werden.

Um den Verlust an Vorspannkraft zu reduzieren, werden beispielsweise bei der Verschraubung von Faserverbundwerkstoffen metallische Buchsen in diese eingesetzt, was jedoch aufwendig und teuer ist.

Die EP 2 617 519 A1 offenbart ein Verfahren der eingangs genannten Art, bei dem ein hohles Element wie ein Hohlniet oder ein Mutterelement zur Anbringung an einem aus einem Verbundwerkstoff bestehenden Bauteil verwendet wird, insbesondere ein Faser verstärktes Kunststoffteil oder ein mit Gewebe verstärktes Kunststoffteil. Dabei kann eine Hilfsspitze zum Durchdringen des Bauteils vorgesehen sein, wobei das Bauteil erwärmt werden kann, um das Durchdringen zu erleichtern.

Die US 2003/021628 A1 offenbart ein Verfahren zur Montage eines Bolzens, wobei der Bolzen über eine Oberfläche eines aus Verbundwerkstoff bestehenden Abschnitts, beispielsweise eines Tanks für eine kryogene Flüssigkeit, derart hinausragt, dass ein weiteres Bauteil am Bolzen angebracht werden kann. Das Verfahren umfasst das Bohren einer Öffnung und das Einsetzen eines Gewindeeinsatzes im Bereich der äußeren Oberfläche der Öffnung.

Aufgabe der Erfindung ist es, ein Verfahren zu schaffen, mit dem die Montage von Faserverbundwerkstoffen in Klemmverbindungen einfacher möglich ist.

Hierzu sind bei einem Verfahren der eingangs genannten Art die folgenden Schritte vorgesehen:
- lokales Verpressen des erhitzten Faserverbundwerkstoffs in dem Montagebereich, sodass sich der Faserverbundwerkstoff um ein vorbestimmtes Maß setzt, und
- Klemmen des Bauteils aus Faserverbundwerkstoff im Montagebereich.

Aufgrund des lokalen Verpressens des erhitzten Faserverbundwerkstoffs erfolgt im Montagebereich ein beschleunigter Setzvorgang, bei dem die Dicke des Bauteils vorteilhaft im Wesentlichen bereits um das Maß reduziert wird, das dem natürlichen Setzvorgang ohne vorheriges Verpressen und Erhitzen entspricht. Da im Laufe der Zeit ein geringeres weiteres Setzen des Werkstoffs erfolgt, bleibt die Vorspannkraft der Klemmverbindung im Wesentlichen erhalten, da das Bauteil unter der Vorspannkraft der Klemmverbindung nur noch in einem geringen Maß nachgibt. Mit diesem Verfahren ist es möglich, eine Klemmkraft direkt auf das Bauteil aus dem Faserverbundwerkstoff einwirken zu lassen, ohne dass die Vorspannkraft der Klemmverbindung im Verlauf der Zeit wesentlich nachlassen würde.

Vorzugsweise wird der Schritt des Erhitzens und Verpressens vor dem Schritt des Verbauens in einer Klemmverbindung und separat davon ausgeführt, z.B. in einer eigens dafür vorgesehenen Vorrichtung.

Zum Durchführen des Verpressens wird das Bauteil beispielsweise zwischen einem Stempel mit einer dem Montagebereich entsprechenden Pressfläche und einer Gegenhalterfläche eingespannt, wobei zwischen Stempel und Gegenhalterfläche die für das lokale Setzen des Faserverbundwerkstoffs notwendige Presskraft aufgebracht wird.

Um die lokale Temperatureinwirkung auf den Montagebereich hervorzurufen, kann z.B. der Stempel und/oder die Gegenhalterfläche beheizt werden.

Die Temperatur des Stempels und/oder der Gegenhalterfläche während des Verpressens kann beispielsweise 80 bis 250 °C, insbesondere etwa 100 °C betragen. Das Bauteil aus Faserverbundwerkstoff wird dabei während des Verpressens oder vor dem Verpressen vorzugsweise auf 80 bis 250 °C, insbesondere auf etwa 100 °C, erhitzt.

Es ist auch möglich, das Bauteil selbst direkt zu erhitzen. Dies kann beispielsweise in einem externen Ofen vor dem Verpressen erfolgen. Ist der Faserverbundwerkstoff elektrisch leitfähig, etwa bei der Verwendung von Kohlefasern, so kann das Bauteil auch durch einen direkten oder induzierten Stromfluss auf die gewünschte Temperatur erhitzt werden. Gegebenenfalls kann die Erhitzung lokal auf den Montagebereich beschränkt bleiben.

Es hat sich gezeigt, dass ein Verpressen mit einer Flächenpressung von 20 bis 140 MPa gute Ergebnisse liefert.

Die Dauer des Verpressens kann beispielsweise 1 bis 5 min, insbesondere etwa 3 min, betragen.

In einer anderen Variante wird der Faserverbundwerkstoff des Bauteils bereits vor dem lokalen Verpressen in der eigentlichen Klemmverbindung montiert und diese wird für das lokale Verpressen verwendet, wobei der Faserverbundwerkstoff des Bauteils zumindest im Montagebereich erhitzt wird. Das Erhitzen kann dabei wie oben beschrieben durch Aufheizen in einem externen Ofen vor der Montage erfolgen und/oder durch Wärmezufuhr während des Verpressens, z.B. durch einen Stromfluss durch den Montagebereich oder eine andere geeignete Art des lokalen Erhitzens. Die für den beschleunigten Setzprozess beim Verpressen notwendige Presskraft wird in diesem Fall durch die Klemmverbindung aufgebracht. Nachdem der Montagebereich den Verpressvorgang durchlaufen hat und das Bauteil wieder abgekühlt ist, wird die Klemmverbindung abschließend angezogen, um das Bauteil endgültig zu montieren.

In das Bauteil aus Faserverbundwerkstoff kann im Montagebereich beispielsweise wenigstens eine Öffnung für ein Befestigungsmittel eingebracht werden, sodass auch Schraubverbindungen durch das Bauteil hindurch möglich sind.

Als Faserverbundwerkstoff kommen insbesondere faserverstärkte Kunststoffe infrage, bevorzugt solche mit einem polymeren Matrixwerkstoff. Als Verstärkungsfasern können beispielsweise Kohlefasern, Glasfasern, Aramidfasern und/oder Basaltfasern, aber auch Naturfasern wie etwa Hanffasern eingesetzt werden. Bei der Verwendung von Endlosfasern können diese als Gelege, Geflecht und/oder Gewebe in die Matrix eingebettet sein.

Die Erfindung wird nachfolgend anhand eines Ausführungsbeispiels mit Bezug auf die beigefügten Zeichnungen näher beschrieben. In den Zeichnungen zeigen:
- Figur 1 eine schematische Schnittansicht eines zwischen einem Stempel und einer Gegenhalterfläche eingespannten Bauteils aus einem Faserverbundwerkstoff vor der Durchführung eines ersten Schritts des erfindungsgemäßen Verfahrens; und
- Figur 2 eine schematische Schnittansicht einer Klemmverbindung mit einem Bauteil aus einem Faserverbundwerkstoff in einem zweiten Schritt eines erfindungsgemäßen Verfahrens.

Die Zeichnungen sind nicht maßstabsgetreu.

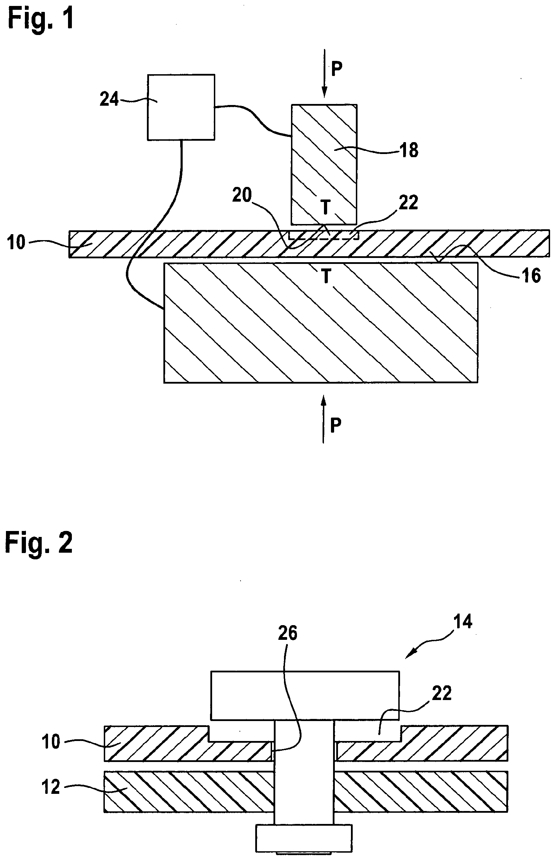

Um ein Bauteil 10 aus einem Faserverbundwerkstoff, beispielsweise einem kohlefaserverstärkten Kunststoff, mit einem weiteren Bauteil 12 in einer Klemmverbindung 14 verbinden zu können (siehe Fig. 2), ohne dass die durch die Klemmverbindung 14 aufgebrachte Vorspannkraft aufgrund eines Setzens des Faserverbundwerkstoffs übermäßig nachlässt, wird das Bauteil 10 aus dem Faserverbundwerkstoff vor dem Herstellen der Klemmverbindung 14 in einem ersten Verfahrensschritt vorbehandelt.

Wie Figur 1 zeigt, wird hierzu das Bauteil 10 aus einem Faserverbundwerkstoff in eine Vorrichtung zwischen einer Gegenhalterfläche 16 und einem Stempel 18 eingespannt, wobei der Stempel 18 an seinem zum Bauteil 10 gerichteten Ende eine Pressfläche 20 aufweist, die in Form und Größe einem späteren Montagebereich 22 entspricht.

Zwischen Stempel 18 und Gegenhalterfläche 16 wird eine vorbestimmte festgelegte Flächenpresskraft P aufgebracht, die beispielsweise einen Druck zwischen 20 und 140 MPa erzeugt. Vorzugsweise ist die aufgebrachte Flächenpresskraft P gleich groß oder größer als die später durch die Klemmverbindung aufgebrachte Vorspannkraft.

Der aufgebrachte Druck wird für einige Zeit beibehalten, beispielsweise etwa 3 Minuten.

Gleichzeitig zum Aufbringen der Flächenpresskraft P wird hier der Stempel 18 insbesondere im Bereich der Pressfläche 20 über eine Heizeinrichtung 24 beheizt, die eine vorgegebene Heiztemperatur T festlegt.

In diesem Beispiel wird außerdem gleichzeitig auch die Gegenhalterfläche 16 im Bereich des Montagebereichs 22 auf dieselbe Temperatur T erhitzt. Es wäre aber auch möglich, nur den Stempel 18 oder nur die Gegenhalterfläche 16 zu beheizen.

Die Temperatur T des Stempels 18 und/oder der Gegenhalterfläche 16 kann beispielhaft etwa 100 °C betragen, wobei hier auch das Bauteil 10 auf eine Temperatur von etwa 100 °C aufgeheizt wird.

Es ist auch möglich, den Montagebereich 22 auf andere Art zu erhitzen, beispielsweise vor dem Einbringen in die Vorrichtung in einem externen Ofen oder, bei einem elektrisch leitfähigen Faserverbundwerkstoff, durch Stromfluss.

Aufgrund der Druck- und der Temperatureinwirkung setzt sich der Faserverbundwerkstoff des Bauteils 10 unterhalb der Pressfläche 20 des Stempels 18, sodass die Dicke des Bauteils 10 im Montagebereich 22 verringert wird. Dies ist in Figur 2 angedeutet.

Druck, Zeit und Temperatur beim Pressvorgang sind im Ermessen des Fachmanns für das jeweilige Bauteil aufeinander abzustimmen. So kann beispielsweise die Flächenpressung reduziert werden, wenn eine höhere Temperatur im Montagebereich verwendet wird.

Nach Abschluss des Heiz- und Pressvorgangs wird das Bauteil 10 aus der Vorrichtung entnommen und kann jetzt weiterverarbeitet werden.

Figur 2 zeigt als ein Beispiel einer Klemmverbindung 14 eine SchraubenMutter-Verbindung zwischen dem vorbehandelten Bauteil 10 aus einem Faserverbundwerkstoff und dem weiteren Bauteil 12, wobei aus Gründen der Übersichtlichkeit die einzelnen Komponenten mit Abstand dargestellt sind.

Das Bauteil 10 weist hier im Montagebereich 22 eine Durchgangsöffnung 26 auf, durch die die Schraube hindurchgreift.

Durch den Schraubenkopf sowie durch die Mutter wird im bereits durch den vorausgegangenen Setzprozess verdichteten Montagebereich 22 eine Klemmkraft aufgebracht.

Nach dem Anziehen der Klemmverbindung 14 bleibt die aufgebrachte Vorspannkraft im Wesentlichen erhalten, da im Montagebereich 22 der Setzprozess des Faserverbundwerkstoffs bereits im Wesentlichen abgeschlossen ist und somit bei einer Einwirkung der Vorspannkraft nur noch eine unwesentliche Dickenänderung erfolgt.

In einer möglichen Variante wird die Klemmverbindung 14 auch genutzt, um den beschleunigten Setzprozess durchzuführen, indem zunächst der Montagebereich 22 auf geeignetem Weg erhitzt wird und die Klemmverbindung 14 angezogen wird. Nachdem sich der Faserverbundwerkstoff um das gewünschte Maß gesetzt hat und das Bauteil wieder abgekühlt ist, wird die Klemmverbindung 14 mit der endgültigen Klemmkraft festgezogen.

## Patentansprüche

1. Verfahren zur Montage eines Bauteils (10) aus einem Faserverbundwerkstoff im Kraftfluss einer Klemmverbindung, mit dem Schritt:
- Erhitzen des Faserverbundwerkstoffs zumindest in einem Montagebereich (22),
**dadurch gekennzeichnet, dass** folgende weitere Schritte vorgesehen sind:
- lokales Verpressen des erhitzten Faserverbundwerkstoffs in dem Montagebereich (22), sodass sich der Faserverbundwerkstoff um ein vorbestimmtes Maß setzt, und
- Klemmen des Bauteils (10) aus Faserverbundwerkstoff im Montagebereich (22).

2. Verfahren nach Anspruch 1, **dadurch gekennzeichnet, dass** das Bauteil (10) aus Verbundwerkstoff zum Verpressen zwischen einem Stempel (18) mit einer dem Montagebereich (22) entsprechenden Pressfläche (20) und einer Gegenhalterfläche (16) eingespannt wird.

3. Verfahren nach Anspruch 2, **dadurch gekennzeichnet, dass** der Stempel (18) und/oder die Gegenhalterfläche (16) beheizt werden und/oder der Montagebereich (22) selbst erhitzt wird.

4. Verfahren nach Anspruch 3, **dadurch gekennzeichnet, dass** der Montagebereich (22) durch Stromdurchfluss und/oder vor dem Verpressen durch Erwärmen in einem Ofen erhitzt wird.

5. Verfahren nach Anspruch 3, **dadurch gekennzeichnet, dass** die Temperatur (T) des Stempels (18) und/oder der Gegenhalterfläche (16) während des Verpressens 80 bis 250 °C, insbesondere etwa 100 °C, beträgt.

6. Verfahren nach einem der vorhergehenden Ansprüche, **dadurch gekennzeichnet, dass** die Temperatur (T) des Bauteils (10) aus Faserverbundwerkstoff während des Verpressens 80 bis 250 °C, insbesondere etwa 100 °C, beträgt.

7. Verfahren nach einem der vorhergehenden Ansprüche, **dadurch gekennzeichnet, dass** das Verpressen mit einer Flächenpressung von 20 bis 140 MPa erfolgt.

8. Verfahren nach einem der vorhergehenden Ansprüche, **dadurch gekennzeichnet, dass** die Dauer des Verpressens 1 bis 5 min, insbesondere etwa 3 min beträgt.

9. Verfahren nach einem der vorhergehenden Ansprüche, **dadurch gekennzeichnet, dass** in das Bauteil (10) aus Faserverbundwerkstoff im Montagebereich (22) wenigstens eine Durchgangsöffnung (26) für ein Befestigungsmittel eingebracht wird.

10. Verfahren nach einem der vorhergehenden Ansprüche, **dadurch gekennzeichnet, dass** der Faserverbundwerkstoff ein faserverstärkter Kunststoff ist.

## Claims

1. Method for mounting a fiber composite component (10) in the force flow of a clamping connection, having the step of:
- heating the fiber composite, at least in an assembly region (22),
**characterized in that** the following further steps are provided:
- locally compressing the heated fiber composite in the assembly region (22) so that the fiber composite settles to a predetermined degree, and
- clamping the component (10) of fiber composite in the assembly region (22).

2. Method according to Claim 1, **characterized in that** the component (10) of composite material is clamped for compression between a die (18) with a pressing face (20) which corresponds to the assembly region (22) and a retention member counter-face (16).

3. Method according to Claim 2, **characterized in that** the die (18) and/or the retention member counter-face (16) are heated and/or the assembly region (22) itself is heated.

4. Method according to Claim 3, **characterized in that** the assembly region (22) is heated by means of current flow and/or prior to the compression by means of heating in an oven.

5. Method according to Claim 3, **characterized in that** the temperature (T) of the die (18) and/or the retention member counter-face (16) during the compression is from 80 to 250°C, in particular approximately 100°C.

6. Method according to one of the preceding claims, **characterized in that** the temperature (T) of the fiber composite component (10) during the compression is from 80 to 250°C, in particular approximately 100°C.

7. Method according to one of the preceding claims, **characterized in that** the compression is carried out with a surface pressure of from 20 to 140 MPa.

8. Method according to one of the preceding claims, **characterized in that** the duration of the compression is from 1 to 5 minutes, in particular approximately 3 minutes.

9. Method according to one of the preceding claims, **characterized in that** at least one through-opening (26) for a securing means is introduced into the fiber composite component (10) in the assembly region (22).

10. Method according to one of the preceding claims, **characterized in that** the fiber composite is a fiberreinforced plastics material.

## Revendications

1. Procédé de montage d'un composant (10) en un matériau composite fibreux dans le flux de force d'une liaison par serrage, comprenant l'étape suivante :
- le chauffage du matériau composite fibreux au moins dans une zone de montage (22),
**caractérisé en ce que** les étapes supplémentaires suivantes sont prévues :
- la compression locale du matériau composite fibreux chauffé dans la zone de montage (22), de telle sorte que le matériau composite fibreux se tasse d'une mesure prédéterminée, et
- le serrage du composant (10) en matériau composite fibreux dans la zone de montage (22).

2. Procédé selon la revendication 1, **caractérisé en ce que** le composant (10) en matériau composite est enserré pour la compression entre un poinçon (18) ayant une surface de compression (20) correspondant à la zone de montage (22) et une surface de contre-appui (16).

3. Procédé selon la revendication 2, **caractérisé en ce que** le poinçon (18) et/ou la surface de contre-appui (16) sont chauffés et/ou la zone de montage (22) elle-même est chauffée.

4. Procédé selon la revendication 3, **caractérisé en ce que** la zone de montage (22) est chauffée par passage de courant et/ou par chauffage dans un four avant la compression.

5. Procédé selon la revendication 3, **caractérisé en ce que** la température (T) du poinçon (18) et/ou de la surface de contre-appui (16) pendant la compression est de 80 à 250 °C, notamment d'environ 100 °C.

6. Procédé selon l'une quelconque des revendications précédentes, **caractérisé en ce que** la température (T) du composant (10) en matériau composite fibreux pendant la compression est de 80 à 250 °C, notamment d'environ 100 °C.

7. Procédé selon l'une quelconque des revendications précédentes, **caractérisé en ce que** la compression a lieu avec une pression de surface de 20 à 140 MPa.

8. Procédé selon l'une quelconque des revendications précédentes, **caractérisé en ce que** la durée de la compression est de 1 à 5 minutes, notamment d'environ 3 minutes.

9. Procédé selon l'une quelconque des revendications précédentes, **caractérisé en ce qu'**au moins une ouverture de passage (26) pour un moyen de fixation est disposée dans le composant (10) en matériau composite fibreux dans la zone de montage (22).

10. Procédé selon l'une quelconque des revendications précédentes, **caractérisé en ce que** le matériau composite fibreux est une matière plastique renforcée par des fibres.
